# EUROPEAN PATENT SPECIFICATION

(11) **EP 4 663 005 B1**
(45) Date of publication and mention of the grant of the patent: **09.12.2026**
(21) Application number: 24382626.0
(22) Date of filing: 10.06.2024
(51) Int. Cl.: A01G 9/02, A01G 24/15, A01G 24/18, A01G 24/46

(54) **MULTI-LAYER CULTIVATION CONFIGURATION FOR VERTICAL GARDENS AND SLOPING VEGETATED SURFACES**
MEHRSCHICHTIGE KULTIVIERUNGSKONFIGURATION FÜR VERTIKALE GARTEN UND GENEIGTE BEWACHSENE OBERFLÄCHEN
CONFIGURATION DE CULTURE MULTICOUCHE POUR JARDINS VERTICAUX ET SURFACES VEGETALES INCLINÉES

(43) Date of publication of application: 17.12.2025
(73) Proprietor: SingularGreen S.L., 03010 Alicante (ES)
(72) Inventor: Serramia Ruiz, Jordi, Alicante (ES)
(74) Representative: Ballester Cañizares, Rosalia

(56) References cited:
- KR-A- 20230 012 250

## Description

### Technical field

The present invention relates to a multi-layer cultivation configuration for vertical gardens and inclined vegetated surfaces, made up of several layers that optimise the management and storage of water and nutrients. This system includes an outer draining layer, an inner layer with a high water and nutrient retention capacity, and a semi-permeable middle layer; improving efficiency in the use of water and fertilisers, protecting stored water from evapotranspiration and guaranteeing adequate aeration of the roots, which facilitates the vegetative development of plants in a sustainable manner.

### State of the art

Currently, various solutions based on vertical gardening systems are known in the state of the art. Among them are vertical gardening systems with inert substrates, where said systems use materials such as rock wool, glass wool and other inert substrates that do not have a cation exchange capacity.

This group of solutions includes Spanish invention ES 2 821 917 T3, which discloses a plant panel and modules for growing plants, which comprises a removable module for housing an inert growing medium, where the removable module has a front, a back, a top and a bottom, and the inert growing medium is configured to receive at least one plant; a support frame for securing the removable module to a wall; a drainage channel formed between the back of the module and the support frame, where the drainage channel is formed in a drainage membrane comprising a permeable membrane and an impermeable membrane, where the permeable membrane is positioned adjacent to the back of the removable module; and an irrigation system for delivering water and nutrients to the growing medium, where the removable module and the irrigation system are configured such that the removable module may be removed from the support frame without removing the irrigation system, and where the excess water delivered to the inert substrate by the irrigation system exits from the growing medium through the permeable membrane and towards the drainage channel without entering into another module located below.

Portuguese invention PL2564689 discloses a plant panel and associated plant wall, comprising at least two growth media for plants, characterised in that said growth media are separated by a middle layer, and where said middle layer prevents direct contact between both growth media, and allows it to be water permeable.

Dutch invention NL8900665A discloses an incremental plant wall comprising a frame, at least one panel supported by the frame containing a plant substrate, means for adding liquid at the top of the panel, means for collecting the liquid at the bottom of the panel, and where the panel is formed by at least two layers of mineral wool, mutually separated by a capillary-separating material.

United States invention US4961284A discloses a vertical garden comprising a plant growing receptacle including a frame of rigid self-supporting material, having an open top and a closed bottom, a custom-shaped liner having an open top and a sealed bottom that is inside and closely fitting to the frame, and a plant growing medium in the liner occupying a substantial portion of its volume.

United States invention US9440411B2 discloses a soil-free living roof and wall system comprising a living layer of bryophytes, lichen and vascular epiphytes on the surface of a thin, light-weight, flexible, fire-resistant mat of mineral wool, and where the mats are adhered to a roof or wall with adhesive or mastic, or may be secured with fasteners.

European patent EP2564688 discloses a plant panel and associated plant wall, comprising at least two growth media for plants and comprising a frame maintaining said growth media, and where said frame is provided with first hanging means able to cooperate with complementary support axes of second hanging means, in order to secure said vegetated panel to a host wall to be equipped with said vegetated panel. The invention also relates to a vegetated wall comprising at least one vegetated panel and a hanging system of said at least one vegetated panel for securing said at least one vegetated panel to a host wall.

These solutions share a number of drawbacks such as a low water retention capacity, a low nutrient retention capacity due to the low cation exchange capacity of the growing medium used, nutrients are easily washed away with irrigation, which reduces their availability for plants, and vertical movement of water that makes it difficult for the roots to absorb nutrients.

Solutions of another type that are commonly known in the state of the art are those based on the use of textiles, geogrids and flexible sheets in vertical gardening systems. These systems typically use flexible layers such as geogrids, textiles and sheets to create pockets in which plants are placed.

This group of solutions includes international application WO2011148011, which discloses a green wall system that comprises covering a façade with a metal structure, suitably anchored, to which is attached a plastic panel that serves as a support means for geogrids that constitute the support means for the plants. At the top of said geogrids are drip-irrigation nozzles fed via a water-recirculation line, since excess water is collected in a channel before being filtered, analysed and supplemented with fertilisers and acids, as appropriate, all of which is controlled by computer, it being possible to drain the recirculation circuit and add fresh water treated by reverse osmosis in a tank.

Likewise, there is also international application WO2012168509A1, which discloses a modular system having a reduced thickness and consisting of a flexible material for cultivating vegetation on vertical surfaces, said system that can be hung on a wall or façade, providing it with a high aesthetic and decorative value, in such a way that nature can be brought anywhere, both inside and outside, in a simple, economical and controlled manner. The invention falls within the fields of decoration, interior design, agriculture, bioclimatic architecture, gardening and landscaping.

United States invention US8141294B2 discloses a vertical garden panel for supporting living plants on a vertical surface that includes a fabric folded into one or more vertically-arranged knife pleats; the pleats are secured and horizontally segmented into vertically arranged, upward facing liner pockets by a securing mechanism; and the invention includes a simple system for removing failing plants, and replacing them with healthy plants, already embedded in growth medium within a root liner pouch.

Spanish invention ES2774311T3 discloses a system for cultivating plants on vertical or inclined planes, especially designed for achieving an optimum development of the plants immediately after the transplanting thereof, said system basically comprising a plurality of modules, each one comprising an outer layer for absorbing the water of the substrate where the root structure is located, and facilitating the passage of air therethrough such that the gaseous exchange is generated between said root structure and the outside environment so that the catabolic process is generated therein. Each module also comprises an inner layer of a material able to absorb and distribute liquid and nutrients to said root structure, and a third optionally waterproofing rear layer.

These solutions share a number of drawbacks in their use, such as the use of geogrids, textiles or flexible sheets with limited capacity to retain water and nutrients, porosity and reduced thickness that facilitates the drainage and distribution of water, but does not optimise nutrient retention, the lower water and nutrient storage capacity compared to the present invention, as well as the dependence on two flexible layers for water distribution and oxygenation without a semi-permeable middle layer.

Still, there is another group of solutions that are based on the use of bentonite in cultivation systems, such as the system of United States invention US11134620B2, which relates to a slurry comprising water, bentonite, and a compound selected from fertiliser, a plant growth regulator, a fungicide and an insecticide.

KR 2023 0012250 A discloses vertical greening modules having a cover layer made of a water retention layer such as a sponge like material or styrofoam. Alternatively, materials can be used for the outer layer which have been made water absorbent by treatment.

These inventions entail a series of drawbacks such as not addressing its use in sheets or its integration in multi-layer systems, as well as not combining it with draining layers in vertical and inclined constructions to optimise the storage and management of water and nutrients.

The invention described herein entails a considerable improvement in the performance of the mentioned crops, since they allow greater water savings, increase the resilience of the vertical garden in the absence of irrigation, reduce the use of fertilisers and facilitate better absorption of nutrients by the plants. This objective is achieved by the invention as defined in claim 1. Preferred or particular embodiments of the present invention are defined in the dependent claims.

### Description of the invention

The present invention relates to a growing medium for vertical gardens and inclined vegetated surfaces that is made up of three main layers, each with specific functions to optimise the storage and management of water and nutrients: an inner layer configured to retain water to release it slowly, preventing the displacement of water by gravity, as well as store nutrients and facilitate their absorption by plants; a semi-impermeable middle layer configured to allow roots and water to pass from the outer layer to the inner layer, as well as to reduce water loss and capillary water transfer; an outer layer configured to distribute irrigation water evenly throughout the height and width of the growing medium, facilitate root growth and oxygenation, as well as provide structural support and thermal insulation.

Thanks to its design, the multi-layer configuration of the present invention combines the advantages of different types of substrates to provide an optimum growing medium for vertical gardens and inclined vegetated surfaces. Firstly, the outer layer, made up of materials such as geotextiles or rock wool, offers a high drainage capacity that ensures correct oxygenation of the substrate. This feature is crucial for oxygenation of the nutrient solution and the development of roots, as the movement of water in this layer facilitates root health and efficient nutrient absorption.

Secondly, the inner layer uses a granular substrate with a high cation exchange capacity, greater than 50 milliequivalents per 100 grams, which allows for high nutrient retention. This reduces the frequency of fertilisation required, providing a continuous source of nutrients for plants and optimising their growth and health. The high water retention capacity of this layer, of at least twice its weight, also ensures that water is released slowly, preventing displacement by gravity and maintaining constant availability of water and nutrients for plants.

Finally, the semi-impermeable middle layer acts as a barrier that allows roots and water to pass from the outer layer to the inner layer, while reducing water loss through capillarity. This middle layer also protects the inner layer from excessive evaporation, ensuring that the stored water and nutrients remain available to plants.

Together, these three layers provide an efficient and long-lasting solution that significantly improves the management of water and nutrients in vertical gardening systems, promoting healthy and sustainable plant development.

Furthermore, the configuration may include a built-in irrigation system at the top, configured to distribute water via drip irrigation, ensuring even water distribution, improving irrigation efficiency and reducing water consumption. Furthermore, it can incorporate a support panel on a wall to house the multi-layer configuration, made of cellular plastic or other similar materials, providing a stable, resistant base for installing the growing medium. The securing system, using stainless steel screws and washers, ensures durable and stable securing of the growing medium to the support panel.

The invention disclosed herein improves the retention and distribution of water and nutrients, reducing the need for frequent irrigation and fertilisation; facilitates better plant growth thanks to adequate oxygenation and nutrient availability; promotes efficient use of water and resources, contributing to more sustainable irrigation; and can be implemented in existing vertical gardening systems, improving the features thereof without needing to significantly modify current structures. Likewise, said invention provides an efficient, durable and sustainable solution for growing plants in vertical environments and inclined surfaces.

### Brief description of the drawings

A very brief description of a series of drawings that aid in better understanding the invention and which are expressly related to an embodiment of said invention that is illustrated by way of a non-limiting example thereof is provided below.
Figure 1 shows a view of the multi-layer cultivation configuration for vertical gardens and inclined vegetated surfaces, object of the present invention.

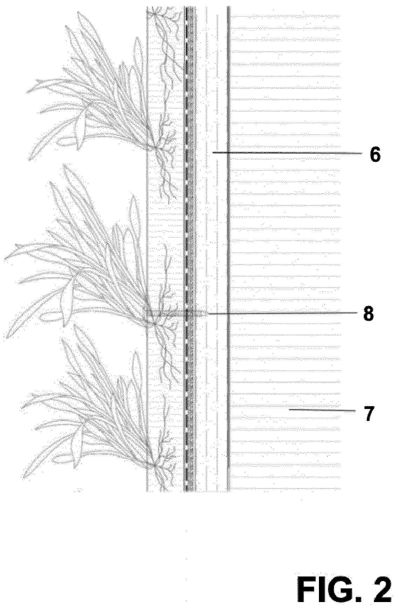

Figure 2 shows a second view of the multi-layer cultivation configuration for vertical gardens and inclined vegetated surfaces, object of the present invention.

### Description of a detailed embodiment of the invention

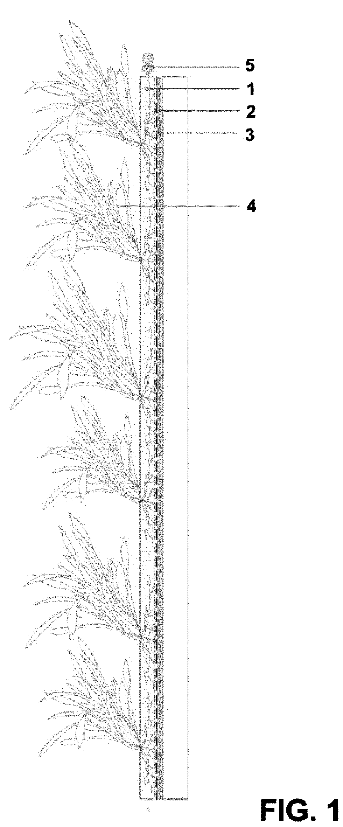

As shown in figure 1, the multi-layer cultivation configuration object of the invention has an outer layer (1) that has a high drainage capacity and a cation exchange capacity equal to zero, configured to distribute irrigation water throughout the height and width of the growing medium, facilitate root growth and oxygenation, as well as provide structural support and thermal insulation; a semi-impermeable intermediate layer (2), located between the outer layer (1) and the inner layer (3), configured to allow roots and water to pass from the outer layer (1) to the inner layer (3), as well as to reduce water loss from the inner layer (1) and capillary water transfer; an inner layer (3) that has a substrate with a high cation exchange capacity and high water retention, configured to retain water and release it slowly, prevent the displacement of water by gravity, as well as store nutrients and facilitate their absorption by plants (4).

In a preferred embodiment, the inner layer (3) has a substrate with a cation exchange capacity greater than 50 milliequivalents per 100 grams.

In a particular embodiment, the configuration incorporates a panel (6) on a wall (7) configured to house the multi-layer configuration by means of a securing system (8) where it further incorporates an irrigation system (5) at the top, configured to distribute water via drip irrigation.

In a first preferred embodiment, the outer layer (1) is made of rock wool, polyurethane foams, geotextiles, geocomposites of inert fibres or other material with equivalent mechanical characteristics.

In a second preferred embodiment, the inner layer (2) is made of a synthetic membrane of nylon, polyester, polypropylene, polyethylene, geocomposites, geotextiles, fabrics and nonwoven fabrics or other material with equivalent mechanical characteristics.

In a third preferred embodiment, the inner layer (3) is made of a porous structure of bentonite sheets, pressed peat sheets combined with geotextiles or other material with equivalent mechanical characteristics.

In a fourth preferred embodiment, the panel (6) is made of cellular plastic or other material with equivalent mechanical characteristics.

In a fifth preferred embodiment, the securing system (8) is of the type that uses stainless steel screws and washers.

## Claims

1. A multi-layer cultivation configuration for vertical gardens and inclined vegetated surfaces, which has three main layers configured to optimise the storage and management of water and nutrients, comprising:
an outer layer (1)
an inner layer (3) that has a substrate with a high cation exchange capacity and high water retention, configured to retain water and release it slowly, prevent the displacement of water by gravity, as well as store nutrients and facilitate their absorption by plants (4);
a semi-impermeable intermediate layer (2), located between the outer layer (1) and the inner layer (3), configured to allow roots and water to pass from the outer layer (1) to the inner layer (3), as well as to reduce water loss from the inner layer (1) and capillarity water transfer,
**characterized in that** the outer layer has a high drainage capacity and a cation exchange capacity equal to zero, configured to distribute irrigation water throughout the height and width of the growing medium, facilitate root growth and oxygenation, as well as provide structural support and thermal insulation.

2. The multi-layer cultivation configuration for vertical gardens and inclined vegetated surfaces according to claim 1, wherein the outer layer (1) is made of rock wool, polyurethane foams, geotextiles, geocomposites of inert fibres or other material with equivalent mechanical characteristics.

3. The multi-layer cultivation configuration for vertical gardens and inclined vegetated surfaces according to claim 1, wherein the inner layer (2) is made of a synthetic membrane of nylon, polyester, polypropylene, polyethylene, geocomposites, geotextiles, fabrics and nonwoven fabrics or other material with equivalent mechanical characteristics.

4. The multi-layer cultivation configuration for vertical gardens and inclined vegetated surfaces according to claim 1, wherein the inner layer (3) is made of a porous structure of bentonite sheets, pressed peat sheets combined with geotextiles or other material with equivalent mechanical characteristics.

5. The multi-layer cultivation configuration for vertical gardens and inclined vegetated surfaces according to claims 1 and 4, wherein the inner layer (3) has a substrate with a cation exchange capacity greater than 50 milliequivalents per 100 grams.

6. The multi-layer cultivation configuration for vertical gardens and inclined vegetated surfaces according to claim 1, wherein an irrigation system (5) is incorporated at the top, configured to distribute water through drip irrigation.

7. The multi-layer cultivation configuration for vertical gardens and inclined vegetated surfaces according to claim 1, wherein a panel (6) is incorporated on a wall (7) configured to house the multi-layer configuration by means of a securing system (8).

8. The multi-layer cultivation configuration for vertical gardens and inclined vegetated surfaces according to claims 1 and 7, wherein the panel (6) is made of cellular plastic or other material with equivalent mechanical characteristics.

9. The multi-layer cultivation configuration for vertical gardens and inclined vegetated surfaces according to claims 1 and 7, wherein the securing system (8) is of the type that uses stainless steel screws and washers.

## Patentansprüche

1. Mehrschichtige Aufzuchtkonfiguration für vertikale Gärten und geneigte begrünte Flächen, die drei Hauptschichten aufweist, die dazu konfiguriert sind, die Speicherung und den Umgang mit Wasser und Nährstoffen zu optimieren, umfassend:
eine äußere Schicht (1)
eine innere Schicht (3), die ein Substrat mit hoher Kationenaustauschkapazität und hoher Wasserrückhaltefähigkeit aufweist, das dazu konfiguriert ist, Wasser zurückzuhalten und langsam abzugeben, die Verdrängung von Wasser durch die Schwerkraft zu verhindern sowie Nährstoffe zu speichern und deren Aufnahme durch Pflanzen (4) zu erleichtern;
eine halbundurchlässige Zwischenschicht (2), die sich zwischen der äußeren Schicht (1) und der inneren Schicht (3) befindet und dazu konfiguriert ist, den Durchgang von Wurzeln und Wasser von der äußeren Schicht (1) zur inneren Schicht (3) zu ermöglichen sowie den Wasserverlust aus der inneren Schicht (1) und den kapillaren Wassertransfer zu reduzieren,
**dadurch gekennzeichnet, dass** die äußere Schicht eine hohe Drainagekapazität und eine Kationenaustauschkapazität gleich Null aufweist und dazu konfiguriert ist, das Bewässerungswasser über die gesamte Höhe und Breite des Wachstumsmediums zu verteilen, um das Wurzelwachstum und die Versorgung mit Sauerstoff zu fördern sowie strukturelle Unterstützung und Wärmeisolierung bereitzustellen.

2. Mehrschichtige Aufzuchtkonfiguration für vertikale Gärten und geneigte begrünte Flächen nach Anspruch 1, wobei die äußere Schicht (1) aus Steinwolle, Polyurethanschäumen, Geotextilien, Geokompositen aus inerten Fasern oder einem anderen Material mit gleichwertigen mechanischen Eigenschaften besteht.

3. Mehrschichtige Aufzuchtkonfiguration für vertikale Gärten und geneigte begrünte Flächen nach Anspruch 1, wobei die innere Schicht (2) aus einer synthetischen Membran aus Nylon, Polyester, Polypropylen, Polyethylen, Geokompositen, Geotextilien, Geweben und Vliesstoffen oder einem anderen Material mit gleichwertigen mechanischen Eigenschaften besteht.

4. Mehrschichtige Aufzuchtkonfiguration für vertikale Gärten und geneigte begrünte Flächen nach Anspruch 1, wobei die innere Schicht (3) aus einer porösen Struktur aus Bentonitplatten, gepressten Torfplatten in Kombination mit Geotextilien oder einem anderen Material mit gleichwertigen mechanischen Eigenschaften besteht.

5. Mehrschichtige Aufzuchtkonfiguration für vertikale Gärten und geneigte begrünte Flächen nach Anspruch 1 und 4, wobei die innere Schicht (3) ein Substrat mit einer Kationenaustauschkapazität von mehr als 50 Milliäquivalenten pro 100 Gramm aufweist.

6. Mehrschichtige Aufzuchtkonfiguration für vertikale Gärten und geneigte begrünte Flächen nach Anspruch 1, wobei oben ein Bewässerungssystem (5) eingebaut ist, das dazu konfiguriert ist, Wasser durch Tropfbewässerung zu verteilen.

7. Mehrschichtige Aufzuchtkonfiguration für vertikale Gärten und geneigte begrünte Flächen nach Anspruch 1, wobei eine Platte (6) an einer Wand (7) angebracht ist, die dazu konfiguriert ist, die mehrschichtige Konfiguration mittels eines Sicherungssystems (8) aufzunehmen.

8. Mehrschichtige Aufzuchtkonfiguration für vertikale Gärten und geneigte begrünte Flächen nach Anspruch 1 und 7, wobei die Platte (6) aus Schaumkunststoff oder einem anderen Material mit gleichwertigen mechanischen Eigenschaften besteht.

9. Mehrschichtige Aufzuchtkonfiguration für vertikale Gärten und geneigte begrünte Flächen nach Anspruch 1 und 7, wobei das Sicherungssystem (8) von der Art ist, die Edelstahlschrauben und -unterlegscheiben verwendet.

## Revendications

1. Configuration de culture multicouche pour jardins verticaux et surfaces végétales inclinées, qui présente trois couches principales conçues pour optimiser le stockage et la gestion de l'eau et des nutriments, comprenant :
une couche externe (1)
une couche interne (3) qui présente un substrat à capacité élevée d'échange cationique et à rétention d'eau élevée, conçue pour retenir l'eau et la libérer lentement, empêcher le déplacement de l'eau par gravité, ainsi que stocker les nutriments et faciliter leur absorption par les plantes (4) ;
une couche intermédiaire semi-imperméable (2), située entre la couche externe (1) et la couche interne (3), conçue pour permettre aux racines et à l'eau de passer de la couche externe (1) à la couche interne (3), ainsi que pour réduire la perte d'eau de la couche interne (1) et le transfert d'eau par capillarité,
**caractérisée en ce que** la couche externe présente une capacité de drainage élevée et une capacité d'échange cationique égale à zéro, conçue pour distribuer l'eau d'irrigation sur toute la hauteur et la largeur du milieu de croissance, faciliter la croissance et l'oxygénation des racines, ainsi que fournir un support structurel et une isolation thermique.

2. Configuration de culture multicouche pour jardins verticaux et surfaces végétales inclinées selon la revendication 1, dans laquelle la couche externe (1) est constituée de laine de roche, mousses de polyuréthane, géotextiles, géocomposites de fibres inertes ou autre matériau avec des caractéristiques mécaniques équivalentes.

3. Configuration de culture multicouche pour jardins verticaux et surfaces végétales inclinées selon la revendication 1, dans laquelle la couche interne (2) est constituée d'une membrane synthétique en nylon, polyester, polypropylène, polyéthylène, géocomposites, géotextiles, tissus et tissus non-tissés ou autre matériau avec des caractéristiques mécaniques équivalentes.

4. Configuration de culture multicouche pour jardins verticaux et surfaces végétales inclinées selon la revendication 1, dans laquelle la couche interne (3) est constituée d'une structure poreuse de feuilles de bentonite, feuilles de tourbe pressées combinées à des géotextiles ou autre matériau avec des caractéristiques mécaniques équivalentes.

5. Configuration de culture multicouche pour jardins verticaux et surfaces végétales inclinées selon les revendications 1 et 4, dans laquelle la couche interne (3) présente un substrat avec une capacité d'échange cationique supérieure à 50 milliéquivalents pour 100 grammes.

6. Configuration de culture multicouche pour jardins verticaux et surfaces végétales inclinées selon la revendication 1, dans laquelle un système d'irrigation (5) est incorporé en partie supérieure, conçu pour distribuer de l'eau à travers une irrigation au goutte-à-goutte.

7. Configuration de culture multicouche pour jardins verticaux et surfaces végétales inclinées selon la revendication 1, dans laquelle un panneau (6) est incorporé sur un mur (7) conçu pour accueillir la configuration multicouche au moyen d'un système de fixation (8).

8. Configuration de culture multicouche pour jardins verticaux et surfaces végétales inclinées selon les revendications 1 et 7, dans laquelle le panneau (6) est constitué de plastique cellulaire ou autre matériau avec des caractéristiques mécaniques équivalentes.

9. Configuration de culture multicouche pour jardins verticaux et surfaces végétales inclinées selon les revendications 1 et 7, dans laquelle le système de fixation (8) est du type qui utilise des vis et des rondelles en acier inoxydable.
